# EUROPÄISCHE PATENTSCHRIFT

(11) **EP 1 557 605 B1**
(45) Veröffentlichungstag und Bekanntmachung des Hinweises auf die Patenterteilung: **24.10.2007**
(21) Anmeldenummer: 04026888.0
(22) Anmeldetag: 12.11.2004
(51) Int. Cl.: F21S 8/12, F21V 7/00, B60Q 1/00

(54) **Fahrzeugscheinwerfer**
Headlamp for automotive vehicle
Phare pour véhicule automobile

(30) Priorität: 23.01.2004 DE 102004003402
(43) Veröffentlichungstag der Anmeldung: 27.07.2005
(73) Patentinhaber: Bayerische Motoren Werke Aktiengesellschaft, 80809 München (DE)
(72) Erfinder: Erdl, Helmut, 83569 Vogtareuth (DE)

(56) Entgegenhaltungen:
- DE-A1- 10 040 302
- DE-A1- 10 115 868
- DE-A1- 10 205 694
- DE-A1- 10 205 776
- DE-A1- 19 649 786
- DE-A1- 19 843 817
- FR-A- 2 710 966

## Beschreibung

Die Erfindung betrifft einen Fahrzeugscheinwerfer mit einem ersten Reflektor, der am Ort einer Lichtquelle einen ersten Brennpunkt aufweist.

Beispielsweise aus der EP 0 900 694 A2 und aus der DE 100 40 302 A1 sind Fahrzeugscheinwerfer bekannt, die in üblicher Weise einen ersten Reflektor aufweisen, in dessen Brennpunkt eine Lichtquelle angeordnet ist. Dabei ist dem Reflektor an seinem Reflektorrand in Hauptabstrahlrichtung ein etwa ringförmiger Lichtleiter vorgelagert, der als ein langgestrecktes Lichtauskoppelelement ausgebildet ist. Aus der DE 100 40 302 A1 ist dabei bekannt, einen zweiten Lichtleiter bzw. ein zweites Lichtauskoppelelement einen benachbarten Fahrzeugscheinwerfer zuzuordnen. Die Lichtleiter bzw. Lichtauskoppelelement werden dabei von einer separaten Lichtquelle beleuchtet.

Nachteilig bei den bekannten Scheinwerfern ist, dass soweit es sich bei der dem ersten Reflektor zugeordneten Lichtquelle um eine Gasentladungslampe, beispielsweise für Tagfahrlicht, handelt, die Farbe des Tagfahrlichts sich von der Farbe des von einer Glühlampe gespeisten Positions- oder Standlichts des Lichtleiters unterscheidet. Weiterhin nachteilig ist, dass durch die zusätzliche Lichtquelle der Aufbau relativ aufwendig ist.

Weiterhin ist aus der DE 101 15 868 A1 ein Scheinwerfer mit einem Reflektor und einer Lichtquelle zur Erzeugung eines Abblendlichts bekannt, der ein Lichtleitelement aufweist, in das Licht der Lichtquelle eingekoppelt und im Bereich eines Reflektors eines benachbarten Scheinwerfers ausgekoppelt wird, um an den benachbarten Scheinwerfer eine weitere Lichtfunktion zu erzeugen. Zur Einkopplung von Licht der Lichtquelle in das Lichtleitelement ist bei dem bekannten Scheinwerfer dem ersten Reflektor in Richtung einer Hauptstrahlrichtung ein Zusatzreflektor vorgelagert ist, durch den von der Lichtquelle ausgesandtes Licht im Wesentlichen quer zur Hauptstrahlrichtung des Scheinwerfers reflektiert wird.

Nachteilig bei dem letztgenannten Scheinwerfer ist, dass die Fläche des Zusatzreflektors relativ klein sein muss, um nicht im Strahlenbereich des ersten Reflektors eine unerwünschte Abschattung zu bilden. Verbunden mit der begrenzten Ausbildungsfreiheit des Zusatzreflektors ist somit eine begrenzte Effizienz der Lichteinkopplung in das Lichtleitelement gegeben.

Aufgabe der vorliegenden Erfindung ist es daher, die bekannten Scheinwerfer so zu verbessern, dass zum einen auf eine zusätzliche Lichtquelle verzichtet werden kann und dass zum anderen die Effizienz der Lichteinkopplung in das Lichtleitelement gesteigert wird.

Diese Aufgabe wird in Verbindung mit dem Oberbegriff des Anspruches 1 dadurch gelöst, dass dem ersten Reflektor entgegen einer Hauptstrahlrichtung ein zweiter Reflektor vorgelagert ist, der einen zweiten Brennpunkt aufweist, der mit dem ersten Brennpunkt des ersten Reflektors zusammenfällt, und dass der zweite Reflektor mindestens einen dritten Brennpunkt im Bereich einer Lichteinkoppelfläche eines Lichtleitelements aufweist, in dem Licht der Lichtquelle bündelbar und in das Lichtleitelement einkoppelbar ist.

Dadurch, dass der zweite Reflektor dem ersten Reflektor entgegengesetzt der Hauptstrahlrichtung vorgelagert ist, kann der zweite Reflektor relativ frei gestaltet werden, ohne dass eine Abschattung des ersten Reflektors zu befürchten ist. Durch die nun mögliche freie Gestaltung des zweiten Reflektors, kann dieser mit hoher Effizienz Licht der Lichtquelle in das Lichtleitelement einkoppeln. Gleichzeitig kann der erste Reflektor relativ unbeeinflusst von dem zweiten Reflektor seiner vorgesehenen Verwendung zugeführt werden. Eine zusätzliche bzw. eigenständige Lichtquelle für das Lichtleitelement kann eingespart werden.

Die beiden Reflektoren können einstückig ausgebildet sein bzw. ineinander übergehen. Der zweite Reflektor kann also im rückwärtigen Bereich des ersten Reflektors an diesen angeformt oder angeflanscht sein.

Gemäß einer bevorzugten Ausführungsform der Erfindung ist der zweite Reflektor so ausgebildet, dass er einen vierten Brennpunkt im Bereich der Lichteinkoppelfläche eines zweiten Lichtleitelementes aufweist, in dem Licht der Lichtquelle bündelbar und in das Lichtleitelement einkoppelbar ist.

Durch die Verwendung eines zweiten Lichtleitelementes in Verbindung mit einem vierten Brennpunkt wird eine Lichteinspeisung an zwei Brennpunkten des zweiten Reflektors in zwei Lichtleitelemente ermöglicht. Der Vorteil besteht in einer größeren Lichtsammelfläche und einer geringeren Apertur, die das Lichtleitelement transportieren muss. Die Systemeffizienz steigt dadurch erheblich. Zur Erzeugung der zwei Brennpunkte kann der zweite Reflektor aus zwei Ellipsoidschalen gebildet werden. Der zweite Reflektor bzw. jede der beiden Ellipsoidschalen kann in den ersten Reflektor hineingezogen werden. Dadurch kann der über die beiden Lichtleitelemente abgeleitete Lichtstrom weiter erhöht werden.

Gemäß einer bevorzugten Ausführungsform der Erfindung ist der zweite Reflektor so ausgebildet, dass auf ihn fallendes Licht der Lichtquelle in eine Lichtaustrittsrichtung gebündelt wird die mit der Hauptstrahlrichtung einen spitzen Winkel bildet.

Dadurch, dass die Lichtaustrittsrichtung zur Hauptstrahlrichtung hin einen spitzen Winkel bildet, kann der zweite Reflektor großflächiger ausgebildet werden, bzw. kann ein größerer Bereich des zweiten Reflektors zur Lichteinkopplung in das Lichtleitelement genutzt werden, wodurch die Effizienz weiter gesteigert wird.

Nach einer weiteren bevorzugten Ausführungsform der Erfindung ist das Lichtleitelement mit einem Nachbarlichtleiter eines benachbarten Scheinwerfers verbunden. Dabei ist der Lichtleiter als ein langgestrecktes Lichtauskoppelelement ausgebildet, das mindestens bereichsweise einem Rand eines Reflektors des benachbarten Scheinwerfers benachbart ist. Der Lichtleiter des benachbarten Scheinwerfers kann beispielsweise als ein Standlicht- bzw. Positionslichtring ausgebildet sein.

Der Nachbarlichtleiter des benachbarten Scheinwerfers benötigt keine eigene Lichtquelle und kann Licht in der gleichen Farbe abstrahlen, wie der das Lichtleitelement aufweisende benachbarte Scheinwerfer.

Gemäß einer weiteren bevorzugten Ausführungsform der Erfindung ist dem ersten Reflektor ein Lichtleiter in Hauptabstrahlrichtung vorgelagert, der als ein langgestrecktes Lichtauskoppelelement ausgebildet ist, das mindestens bereichsweise einem Rand des ersten Reflektors benachbart ist, und dass eine dem ersten Reflektor abgewandte Lichtaustrittsfläche und eine dem ersten Reflektor zugewandte Lichteintrittsfläche aufweist.

Der dem ersten Reflektor vorgelagerte Lichtleiter kann ebenfalls wie der Nachbarlichtleiter des benachbarten Fahrzeugscheinwerfers als Standlicht- bzw. Positionslichtring benutzt werden. Er kann grundsätzlich auch über das Lichtleitelement Licht einkoppeln.

Gemäß einer weiteren bevorzugten Ausführungsform der Erfindung ist der erste Reflektor so ausgebildet, dass von der Lichtquelle abgestrahltes Licht in einer Brennlinie fokussiert wird, die der Lichteintrittsfläche des Lichtleiters benachbart ist. Durch die Fokussierung von der Lichtquelle abgestrahlten Lichtes in einer Brennlinie kann sehr effizient Licht der Lichtquelle in den Lichtleiter eingekoppelt werden. Dadurch wird des insbesondere möglich, den Lichtleiter zur Erzeugung eines Tagfahrlichtes zu nutzen.

Nach einer weiteren bevorzugten Ausführungsform der Erfindung ist der zentrale Bereich des ersten Reflektors für weitere Lichtfunktionen nutzbar. Durch die Nutzung des zentralen Bereiches bzw. des von dem Lichtleiter umschlossenen zentralen Bereiches des Fahrzeugscheinwerfers kann damit platzsparend eine weitere Lichtfunktion, wie beispielsweise Kurvenlicht oder Fernlicht, erzielt werden.

Gemäß einer weiteren bevorzugten Ausführungsform der Erfindung weist die Lichtquelle im ersten Brennpunkt eine erste Wendel zur Erzeugung des in den Lichtleiter einzukoppelnden Lichts und eine der ersten Wendel in Abstrahlrichtung vorgelagerte zweite Wendel zur Erzeugung von Licht für eine weitere Lichtfunktion auf. Dabei kann in dem vom Lichtleiter umschlossenen Bereich eine Linse für die weitere Lichtfunktion angeordnet sein. Das Licht der zweiten Wendel kann dabei direkt in die Linse eingestrahlt werden. Die Verwendung einer Lichtquelle mit zwei Wendeln ergibt dabei eine zusätzliche Kostenreduktion und vereinfacht den Lampentausch. Die Reflektorkonstruktion kann dadurch ebenfalls vereinfacht sein. Gegebenenfalls ist es auch möglich, die zweite Wendel zum Reflektor bzw. zur ersten Wendel hin abzuschirmen oder zwei separate Lichtquellen bzw. Lampen hintereinander anzuordnen, die gegebenenfalls auf einem gemeinsamen Lampenträger befestigt werden. Dadurch würden Speziallampen vermieden werden.

Nach weiteren bevorzugten Ausführungsform der Erfindung ist die Linse so ausgebildet und / oder gegenüber der zweiten Wendel so angeordnet, dass sie ein seitlich abgelenktes Kurvenlicht erzeugt. Insbesondere wenn die Linsenachse gegenüber der Scheinwerferachse versetzt ist und/oder Prismen auf der Linsenoberfläche enthält, lässt sich ein aufschaltbares Kurvenlicht/Abbiegelicht einfach und kostengünstig erzeugen.

Durch Dimmung der Lichtquelle bzw. der Taglichtfunktion kann der Lichtleiter zugleich zur Erzeugung eines Positions- oder Standlichtes genutzt werden.

Reflektor und Lichtleiter können grundsätzlich neben einer kreisförmigen Struktur auch eine andere, beispielsweise rechteckige Struktur, aufweisen.

Weitere Einzelheiten der Erfindung ergeben sich aus der nachstehenden, ausführlichen Beschreibung und den beigefügten Zeichnungen, in denen bevorzugte Ausführungsformen der Erfindung beispielsweise veranschaulicht sind.

In den Zeichnungen zeigen:

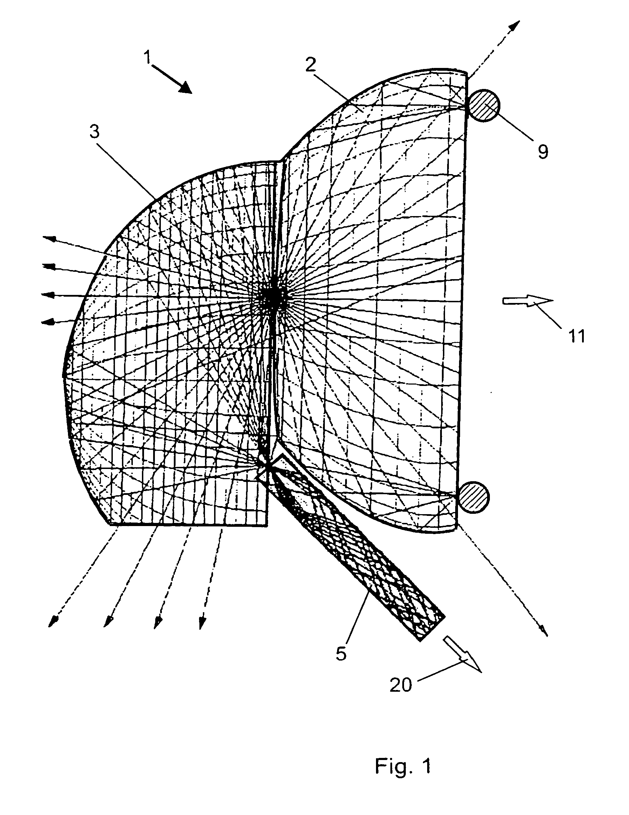

- Figur 1:: eine Seitenansicht eines Scheinwerfers mit Einkopplung von Licht einer Lichtquelle in ein Lichtleitelement mit Darstellung der Lichtstrahlung,

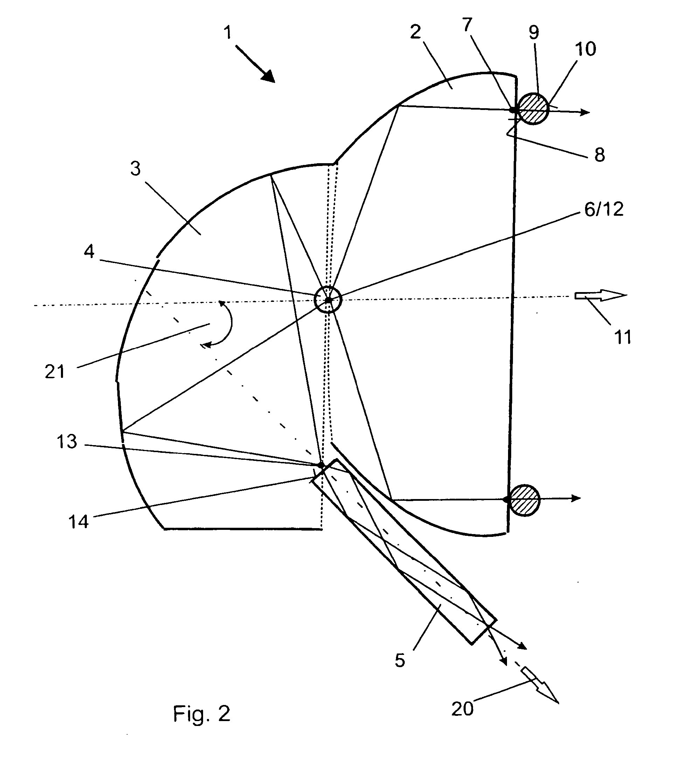

- Figur 2:: eine Seitenansicht im Schnitt des Scheinwerfers von Fig. 1 mit einzelnen Lichtstrahlen und

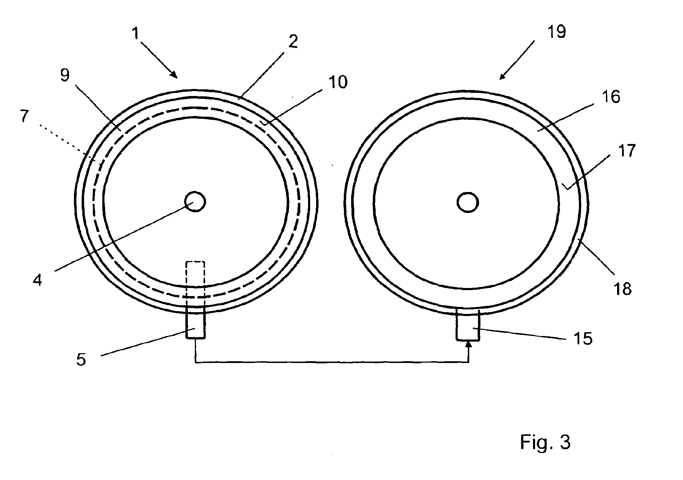

- Figur 3:: eine Vorderansicht zweier benachbarter Fahrzeugscheinwerfer in verkleinerter Darstellung.
- Figur 4:: eine Seitenansicht im Schnitt eines Scheinwerfers mit zwei zusätzlichen Brennpunkten im zweiten Reflektor und zwei Lichtleitelementen und
- Figur 5:: eine Seitenansicht im Schnitt eines Scheinwerfers mit zusätzlicher Lichtfunktion im zentralen Bereich des ersten Reflektors.

Ein Fahrzeugscheinwerfer 1 besteht im Wesentlichen aus einem ersten Reflektor 2, einem zweiten Reflektor 3, einer Lichtquelle 4 und einem Lichtleitelement 5.

Der erste Reflektor 2 weist am Ort der Lichtquelle 4 einen ersten Brennpunkt 6 auf. Der erste Reflektor 2 ist dabei so ausgeformt, dass Licht der Lichtquelle 4 in einer kreisförmigen Brennlinie 7 fokussiert wird, die einer dem ersten Reflektor 2 zugewandten Lichteintrittsfläche 8 eines dem ersten Reflektor 2 vorgelagerten ringförmigen Lichtleiters 9 benachbart ist. Das in der Brennlinie 7 fokussierte Licht wird über die Lichteintrittsfläche 8 den Lichtleiter 9, der als ein Lichtauskoppelelement ausgebildet ist, eingekoppelt und über eine der Lichteintrittsfläche 8 abgewandte Lichtaustrittsfläche 10 ausgekoppelt. Damit ist es möglich, über den Lichtleiter 9 ein Tagfahrlicht zu erzeugen bzw. auszukoppeln.

Dem ersten Reflektor 2 ist entgegen einer Hauptabstrahlrichtung 11 der zweite Reflektor 3 vorgelagert. Der zweite Reflektor 3 weist einen zweiten Brennpunkt 12 auf, der mit dem ersten Brennpunkt 6 des ersten Reflektors 2 zusammenfällt und sich damit ebenfalls am Ort der Lichtquelle 4 befindet. Der zweite Reflektor 3 weist einen dritten Brennpunkt 13 auf, in dem Licht der Lichtquelle 4 gebündelt bzw. fokussiert und über eine Einkoppelfläche 14, die eine Stirnfläche des Lichtleitelements 5 bildet, in das Lichtleitelement 5 eingekoppelt wird. Der zweite Reflektor 3 bündelt Licht der Lichtquelle 4 in eine Lichtaustrittsrichtung 20, die mit der Hauptabstrahlrichtung 11 einen spitzen Winkel 21 bildet.

Das Lichtleitelement 5 ist mit einem Lichteinkoppelelement 15 eines Nachbarlichtleiters 16 verbunden. Der Nachbarlichtleiter 16 weist eine Lichtauskoppelfläche 17 auf, über die das von dem Lichtleitelement 5 eingekoppelte Licht ausgekoppelt wird. Der Nachbarlichtleiter 16 ist einem Reflektor 18 eines dem Fahrzeugscheinwerfer 1 benachbarten Scheinwerfers 19 vorgelagert. Der Nachbarlichtleiter 16 ist ebenfalls als ein ringförmiges Lichtauskoppelelement ausgebildet und einem Rand des Reflektors 18 benachbart.

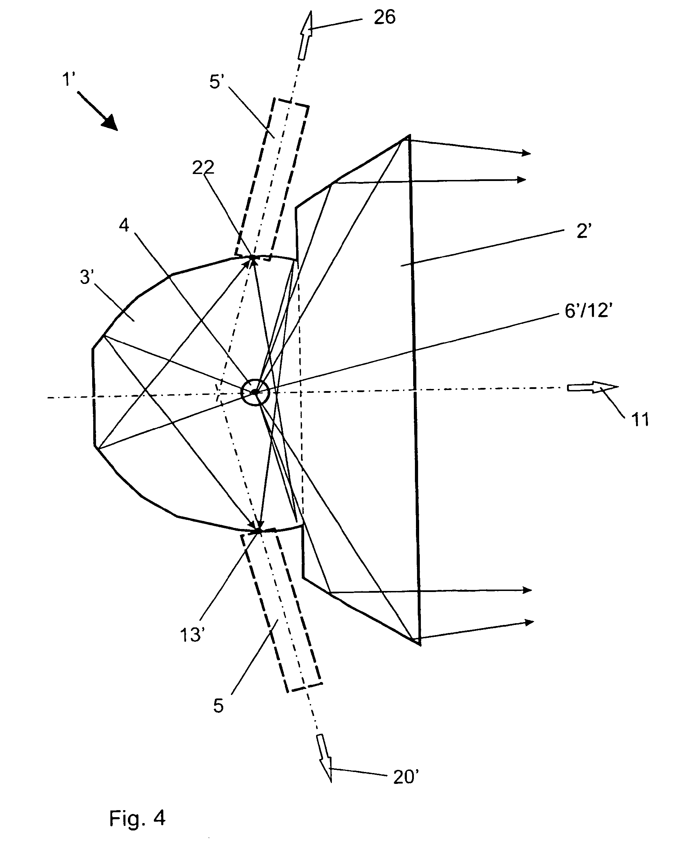

Entsprechend Figur 4 ist dem ersten Reflektor 2' entgegen seiner Hauptabstrahlrichtung 11 ein zweiter Reflektor 3' mit einem zusätzlichen vierten Brennpunkt 22 vorgelagert. In dem vierten Brennpunkt 22 wird ebenfalls Licht der Lichtquelle 4 gebündelt bzw. fokussiert und über eine Einkoppelfläche 14', die eine Stirnfläche eines zweiten Lichtleitelements 5' bildet, in das zweite Lichtleitelement 5' eingekoppelt. Der zweite Reflektor 3' bündelt somit Licht der Lichtquelle 4 in eine Lichtaustrittsrichtung 20' und in eine zweite Lichtaustrittsrichtung 26, die mit der Hauptabstrahlrichtung 11 einen spitzen Winkel 21 bildet.

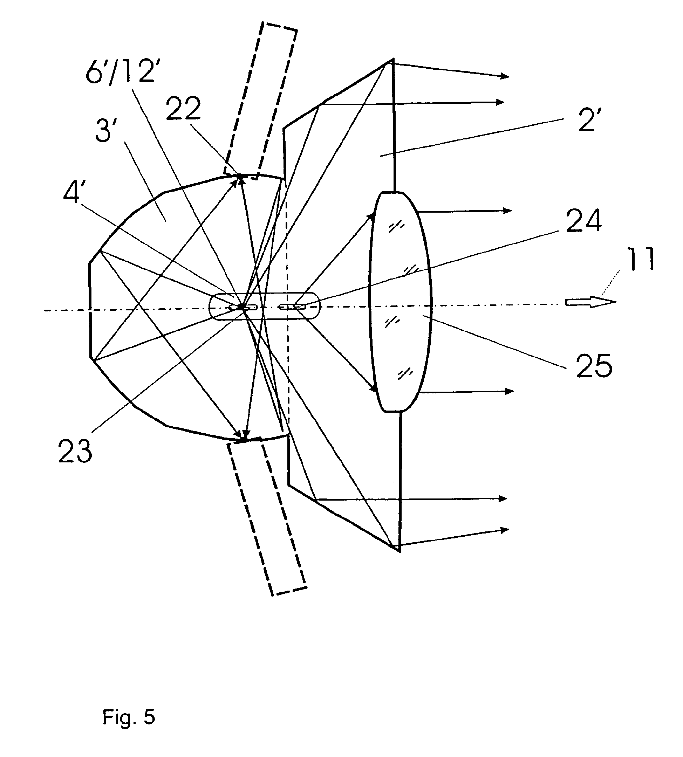

In dem Ausführungsbeispiel nach Figur 5 weist die Lichtquelle 4' neben einer erste Wendel 23 in Hauptabstrahlrichtung 11 eine der ersten Wendel 23 vorgelagerte zweite Wendel 24 zur Erzeugung von Licht für eine weitere Lichtfunktion auf. Für die weitere Lichtfunktion ist in dem zentralen Bereich eine Linse 25 angeordnet. Das Licht der zweiten Wendel 24 wird direkt in die Linse 25 eingestrahlt.

## Patentansprüche

1. Fahrzeugscheinwerfer mit einem ersten Reflektor, der am Ort einer Lichtquelle einen ersten Brennpunkt aufweist, **dadurch gekennzeichnet, dass** dem ersten Reflektor (2, 2') entgegen einer Hauptstrahlrichtung (11) ein zweiter Reflektor (3, 3') vorgelagert ist, der einen zweiten Brennpunkt (12, 12') aufweist, der mit dem ersten Brennpunkt (6, 6') des ersten Reflektors (2, 2') zusammenfällt,
und dass der zweite Reflektor (3, 3') mindestens einen dritten Brennpunkt (13, 13') im Bereich einer Lichteinkoppelfläche (14) eines Lichtleitelementes (5) aufweist, in dem Licht der Lichtquelle (4) bündelbar und in das Lichtleitelement (5) einkoppelbar ist.

2. Fahrzeugscheinwerfer nach Anspruch 1, **dadurch gekennzeichnet, dass** der zweite Reflektor (3') einen vierten Brennpunkt (22) im Bereich der Lichteinkoppelfläche (14') eines zweiten Lichtleitelementes (5') aufweist, in dem Licht der Lichtquelle (4) bündelbar und in das Lichtleitelement (5') einkoppelbar ist.

3. Fahrzeugscheinwerfer nach Anspruch 1oder 2, **dadurch gekennzeichnet, dass** die beiden Reflektoren (2, 2'; 3, 3') einstückig ineinander übergehen.

4. Fahrzeugscheinwerfer nach einem der Ansprüche 1 bis 3, **dadurch gekennzeichnet, dass** der zweite Reflektor (3, 3') Licht der Lichtquelle (4) in eine Lichtaustrittsrichtung (20, 20', 26) bündelt, die mit der Hauptstrahlrichtung (11) einen Winkel (21) bildet.

5. Fahrzeugscheinwerfer nach Anspruch 4, **dadurch gekennzeichnet, dass** der Winkel (21) zwischen der Hauptabstrahlrichtung (11) und der Lichtaustrittsrichtung (20, 20', 26) als spitzer Winkel ausgebildet ist.

6. Fahrzeugscheinwerfer nach einem der Ansprüche 1 bis 5, **dadurch gekennzeichnet, dass** das Lichtleitelement (5, 5') mit einem Nachbarlichtleiter (16) eines benachbarten Scheinwerfers (19) verbunden ist, und dass der Nachbarlichtleiter (16) als ein langgestrecktes Lichtauskoppelelement ausgebildet ist, das mindestens bereichsweise einem Rand eines Reflektors (18) des benachbarten Scheinwerfers (19) benachbart ist.

7. Fahrzeugscheinwerfer nach Anspruch 6, **dadurch gekennzeichnet, dass** der Nachbarlichtleiter (16) des benachbarten Scheinwerfers (19) als ein Standlichtring ausgebildet ist.

8. Fahrzeugscheinwerfer nach einem der Ansprüche 1 bis 7, **dadurch gekennzeichnet, dass** dem ersten Reflektor (2) ein Lichtleiter (9) in Hauptabstrahlrichtung (11) vorgelagert ist, der als ein langgestrecktes Lichtauskoppelelement ausgebildet ist, das mindestens bereichsweise einem Rand des ersten Reflektors (2) benachbart ist, und der eine dem ersten Reflektor (2) abgewandte Lichtaustrittsfläche (10) und eine dem ersten Reflektor (2) zugewandte Lichteintrittsfläche (8) aufweist.

9. Fahrzeugscheinwerfer nach Anspruch 8, **dadurch gekennzeichnet, dass** der erste Reflektor (2) so ausgebildet ist, dass von der Lichtquelle (4) abgestrahltes Licht in einer Brennlinie (7) fokussiert wird, die der Lichteintrittsfläche (8) des Lichtleiters (4) benachbart ist.

10. Fahrzeugscheinwerfer nach einem der Ansprüche 1 bis 9, **dadurch gekennzeichnet, dass** der zentrale Bereich des ersten Reflektors (2, 2') für weitere Lichtfunktionen nutzbar ist.

11. Fahrzeugscheinwerfer nach Anspruch 10, **dadurch gekennzeichnet, dass** die Lichtquelle (4') neben einer erste Wendel (23) in Abstrahlrichtung (11) eine der ersten Wendel (23) vorgelagerte zweite Wendel (24) zur Erzeugung von Licht für eine weitere Lichtfunktion aufweist.

12. Fahrzeugscheinwerfer nach den Ansprüchen 10 oder 11, **dadurch gekennzeichnet, dass** in dem zentralen Bereich eine Linse (25) für die weitere Lichtfunktion angeordnet ist.

13. Fahrzeugscheinwerfer nach Anspruch 12, **dadurch gekennzeichnet, dass** Licht der zweiten Wendel (24) direkt in die Linse (25) eingestrahlt wird.

14. Fahrzeugscheinwerfer nach einem der Ansprüche 12 oder 13, **dadurch gekennzeichnet, dass** die Linse (25) so ausgebildet und / oder gegenüber der zweiten Wendel (24) so angeordnet ist, dass sie ein seitlich abgelenktes Kurvenlicht erzeugt.

15. Fahrzeugscheinwerfer nach einem der Ansprüche 1 bis 14, **dadurch gekennzeichnet, dass** über den Lichtleiter (9) ein Tagfahrlicht auskoppelbar ist.

16. Fahrzeugscheinwerfer nach einem der Ansprüche 7 bis 15, **dadurch gekennzeichnet, dass** durch Dimmung der Lichtquelle (4) ein Positionslicht über den Lichtleiter (4) auskoppelbar ist.

## Claims

1. A vehicle headlamp comprising a first reflector with a first focus at the site of a light source, **characterised in that** a second reflector (3, 3') is disposed in front of the first reflector (2, 2') against a main direction of radiation (11) and comprises a second focus (12, 12') which coincides with the first focus (6, 6') of the first reflector (2, 2'), and
the second reflector (3, 3') has at least one third focus (13, 13') in the region of a light coupling-in surface (14) of a fibre optic element (5) into which light from the source (4) can be focused and coupled into the fibre optic element (5).

2. A headlamp according to claim 1, **characterised in that** the second reflector (3') has a fourth focus (22) in the neighbourhood of the light coupling-in surface (14') of a second fibre optic element (5'), into which light from the source (4) can be focused and coupled into the fibre optic element (5').

3. A headlamp according to claim 1 or 2, **characterised in that** the two reflectors (2, 2'; 3, 3') are in one piece and merge into one another.

4. A headlamp according to any of claims 1 to 3, **characterised in that** the second reflector (3, 3') focuses light from the source (4) in a light exit direction (20, 20', 26) at an angle (21) to the direction of the main beam (11).

5. A headlamp according to claim 4, **characterised in that** the angle (21) between the main beam direction (11) and the light exit direction (20, 20', 26) is an acute angle.

6. A headlamp according to any of claims 1 to 5, **characterised in that** the fibre optic element (5, 5') is connected to a neighbouring waveguide (16) of a neighbouring headlamp (19) and the neighbouring waveguide (16) is an elongate light decoupling element which at least at places adjoins an edge of a reflector (18) of the neighbouring headlamp (19).

7. A headlamp according to claim 6, **characterised in that** the neighbouring waveguide (16) of the neighbouring headlamp (19) is a sidemarker ring.

8. A headlamp according to any of claims 1 to 7, **characterised in that** a waveguide (9) is disposed in front of the first reflector (2) in the main beam direction (11) and is in the form of a elongate light decoupling element which at least at places adjoins an edge of the first reflector (2) and has a light exit surface (10) remote from the first reflector (2) and a light entry surface (8) facing the first reflector (2).

9. A headlamp according to claim 8, **characterised in that** the first reflector (2) is constructed so that light radiated from the source (4) is focused along a line (7) near the light entry surface (8) of the waveguide (4).

10. A headlamp according to any of claims 1 to 9, **characterised in that** the central region of the first reflector (2, 2') is usable for other lighting functions.

11. A headlamp according to claim 10, **characterised in that** the light source (4') comprises a first helix (23) in the direction of radiation (11) and a second helix (24) in front of the first helix (23) for generating light for an additional lighting function.

12. A headlamp according to claim 10 or 11, **characterised in that** a lens (25) for the additional lighting function is disposed in the central region.

13. A headlamp according to claim 12, **characterised in that** light from the second helix (24) is radiated directly into the lens (25).

14. A headlamp according to claim 12 or 13, **characterised in that** the lens (25) is constructed and/or disposed relative to the second helix (24) so as to produce laterally deflected light on bends.

15. A headlamp according to any of claims 1 to 14, **characterised in that** daylight-driving light can be decoupled via the waveguide (9).

16. A headlamp according to any of claims 7 to 15, **characterised in that** a position light can be uncoupled via the waveguide (4) by dimming the source (4).

## Revendications

1. Phare de véhicule comportant un premier réflecteur ayant un premier foyer à l'endroit d'une source lumineuse,
**caractérisé en ce que**
le premier réflecteur 2, 2' est précédé dans la direction opposée à la direction d'émission du faisceau principal 11 d'un second réflecteur 3, 3' ayant un second foyer 12, 12'coïncidant avec le premier foyer 6, 6' du premier réflecteur 2, 2' ; et
le second réflecteur 3, 3' a au moins un troisième foyer 13, 13' au niveau de la surface de couplage de lumière 14 d'un élément guide de lumière 5 qui regroupe la lumière de la source lumineuse 4 et l'injecte dans l'élément de guide de lumière 5.

2. Phare de véhicule selon la revendication 1,
**caractérisé en ce que**
le second réflecteur 3' possède un quatrième foyer 22 au niveau de la surface de couplage de lumière 14' d'un second élément guide de lumière 5' dans lequel on regroupe la lumière de la source lumineuse 4 et on l'injecte dans l'élément guide de lumière 5'.

3. Phare de véhicule selon la revendication 1 ou 2,
**caractérisé en ce que**
les deux réflecteurs (2, 2' ;3, 3') se rejoignent en une seule pièce.

4. Phare de véhicule selon l'une des revendications 1 à 3,
**caractérisé en ce que**
le second réflecteur 3, 3' regroupe la lumière de la source lumineuse 4 dans la direction de sortie de lumière 20, 20', 26 formant un angle 21 avec la direction principale 11 du faisceau.

5. Phare de véhicule selon la revendication 4,
**caractérisé en ce que**
l'angle 21 entre la direction principale d'émission du faisceau 11 et la direction de sortie de lumière 20, 20', 26 est un angle aigu.

6. Phare de véhicule selon l'une des revendications 1 à 5,
**caractérisé en ce que**
l'élément guide de lumière 5, 5' est relié à un guide de lumière voisin 16 d'un phare voisin 19 et le guide de lumière voisin 16 est un élément de découplage de lumière, allongé, au voisinage au moins par zones d'un bord d'un réflecteur 18 du phare voisin 19.

7. Phare de véhicule selon la revendication 6,
**caractérisé en ce que**
le guide de lumière voisin 16 du phare voisin 19 est un anneau de feu de position.

8. Phare de véhicule selon l'une des revendications 1 à 7,
**caractérisé en ce que**
le premier réflecteur 2 est précédé dans la direction principale d'émission du faisceau 11 d'un guide de lumière 9 réalisé sous la forme d'un élément de découplage de lumière, allongé, qui est au moins voisin par zones d'un bord du premier réflecteur 2 et comporte une surface de sortie de lumière 10 à l'opposé du premier réflecteur 2 et une surface d'entrée de lumière 9 tournée vers le premier réflecteur 2.

9. Phare de véhicule selon la revendication 8,
**caractérisé en ce que**
le premier réflecteur 2 est réalisé pour que la lumière émise par la source lumineuse 4 soit focalisée suivant une ligne focale 7 voisine de la surface d'entrée de lumière 8 du guide de lumière 4.

10. Phare de véhicule selon l'une des revendications 1 à 9,
**caractérisé en ce que**
la zone centrale du premier réflecteur 2, 2' est utilisable pour d'autres fonctions d'éclairage.

11. Phare de véhicule selon la revendication 10,
**caractérisé en ce que**
la source lumineuse 4'comporte en plus d'un premier filament 23, dans la direction d'émission du faisceau 11, un second filament 24 en amont du premier filament 23 pour générer la lumière destinée à une autre fonction d'éclairage.

12. Phare de véhicule selon les revendications 10 et 11,
**caractérisé par**
une lentille 25 installée dans la zone centrale et servant à une autre fonction d'éclairage.

13. Phare de véhicule selon la revendication 12,
**caractérisé en ce que**
la lumière du second filament 24 est rayonnée directement dans la lentille 25.

14. Phare de véhicule selon l'une des revendications 12 ou 13,
**caractérisé en ce que**
la lentille 25 est réalisée et/ou est disposée par rapport au second filament 24 pour générer un faisceau de courbe, dévié vers le côté.

15. Phare de véhicule selon l'une des revendications 1 à 14,
**caractérisé en ce que**
le feu diurne est découplé par le guide de lumière 9.

16. Phare de véhicule selon l'une des revendications 7 à 15,
**caractérisé en ce qu'**
en atténuant la source lumineuse 4 on découple un feu de position par le guide de lumière 4.
